# EUROPEAN PATENT APPLICATION

(11) **EP 1 564 895 A1**
(43) Date of publication of application: **17.08.2005**
(21) Application number: 03772846.6
(22) Date of filing: 18.11.2003
(51) Int. Cl.: H04B 1/04, H04B 7/26, E05F 15/20

(54) **INFORMATION RECEIVING APPARATUS, OPERATION APPARATUS, INFORMATION PROCESSING SYSTEM AND PROGRAM**

(30) Priority: 20.11.2002 JP 2002336427
(71) Applicant: MATSUSHITA ELECTRIC INDUSTRIAL CO., LTD., Kadoma-shi, Osaka 571-8501 (JP)
(72) Inventor: IKEDA, Takumi, Kobe-shi, Hyogo 651-0053 (JP)
(74) Representative: Pautex Schneider, Nicole
(86) International application number: PCT/JP2003/014632
(87) International publication number: WO 2004/047319

(57) **Abstract**

An information transmitting apparatus includes an information storage part for storing information, a sensing part for sensing a mobile condition such as a speed, and an information transmission part for changing an information transmittable distance based on the mobile condition before transmitting the information. Based on the mobile condition, the transmitting apparatus automatically changes an information transmittable distance, thereby allowing an apparatus that operates by receiving the information to operate in good timing.

## Description

### Technical Field

The present invention relates to an information processing system that changes an information transmission distance in response to a mobile condition such as speed or acceleration.

### Background Art

Bluetooth is known as prior art of the present invention. Bluetooth is one of radio communication standards, and this standard is set on purpose to raise awareness of power-saving and a short distance communication, e.g. 1 mW transmission power can transmit information within approx. 10 meters. Maximum transmittable distance can be 100 meters by increasing the transmission power. (Bluetooth is a trademark of Telefonaktiebolaget L M Ericsson Inc.)

However, the prior art discussed above cannot automatically change a transmission distance of information in response to a moving speed or acceleration, so that an apparatus, which receives information from a mobile information transmitting apparatus and operates accordingly, cannot operate in good timing. The prior art also cannot do the following subject: "During a halt, transmit information within a short distance and authenticate apparatuses nearby only, while during a movement, transmit information in response to the moving speed in order to authenticate apparatuses in good timing."

### Disclosure of Invention

The present invention aims to provide an apparatus that can change automatically an information transmittable distance in response to a mobile condition, thereby allowing apparatuses to receive the information for operating in good timing. To achieve this objective, an information transmitting apparatus of the present invention comprises the following elements:
an information storage part;
a sensing part for sensing a mobile condition of the transmitting apparatus; and
an information transmission part for changing an information transmittable distance in response to the mobile condition before transmitting the information.

An operation apparatus of the present invention comprises the following elements:
an information reception part for receiving information from the transmitting apparatus;
an authentication part for authenticate apparatuses based on the information received; and
an operation part for carrying out a given operation when the authentication results in permission.

An information processing system of the present invention comprises the information transmitting apparatus and the operation apparatus discussed above, and a program of the present invention allows a computer to control respective steps in the foregoing information processing system.

### Brief Description of the Drawings

Fig. 1 shows a block diagram illustrating an information processing system in accordance with an exemplary embodiment of the present invention.
Fig. 2 shows a flowchart illustrating an operation of an information transmitting apparatus in accordance with an exemplary embodiment of the present invention.
Fig. 3 shows a flowchart illustrating an operation of an operation apparatus in accordance with an exemplary embodiment of the present invention.
Fig. 4 shows a schematic diagram illustrating an information processing system in accordance with an exemplary embodiment of the present invention.
Fig. 5 shows a control table of information transmitting mode of the information transmitting apparatus in accordance with a first exemplary embodiment of the present invention.
Fig. 6 shows an identifier control table of the operation apparatus for identifying information transmitting apparatus in accordance with an exemplary embodiment of the present invention.
Fig. 7 shows a control table of information transmitting mode of the information transmitting apparatus in accordance with a second exemplary embodiment of the present invention.
Fig. 8 shows a control table of information transmitting mode of the information transmitting apparatus in accordance with a third exemplary embodiment of the present invention.

### Detailed Description of Preferred Embodiments

### Exemplary Embodiment

Exemplary embodiments of information processing system are demonstrated hereinafter with reference to the accompanying drawings. Structural elements having the same reference marks in the embodiments work in a similar way to each other, so that descriptions thereof are not always repeated.

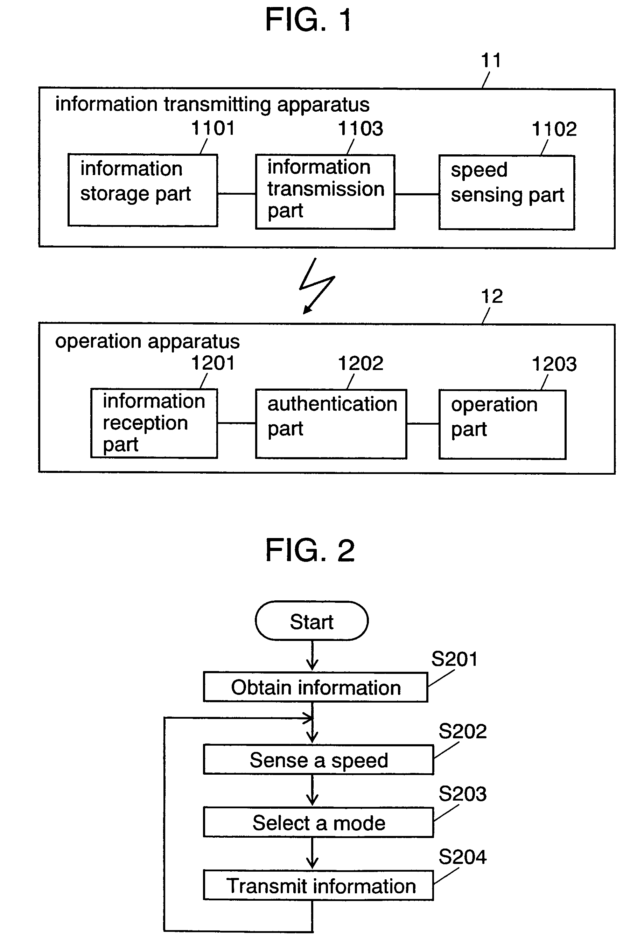

Fig. 1 shows a block diagram illustrating an information processing system in accordance with an exemplary embodiment. The processing system includes information transmitting apparatus 11 and operation apparatus 12. Transmitting apparatus 11 comprises information storage part 1101, speed sensing part 1102, and information transmission part 1103. Operation apparatus 12 comprises information reception part 1201, authentication part 1202, and operation part 1203.

Storage part 1101 stores information, which includes the information for authentication at operation apparatus 12 and the information transmitting apparatus identifier for identifying transmitting apparatus 11. No format or content is specified about the information. Storage part 1101 can be a non-volatile or volatile memory medium. Speed sensing part 1102 senses a moving speed of transmitting apparatus 11, and can be embodied by a speed sensor and driving software for the sensor.

Information transmission part 1103 changes an information transmittable distance in response to a speed before transmitting the information stored in storage part 1101, and can be embodied by a radio communicating means. Transmission part 1103 is a communicating means in accordance with the Bluetooth standard, and changes the information transmittable distance, e.g. in three ranks, in response to a speed for transmitting information. Transmission part 1103 can be a communicating means in accordance with standards other than Bluetooth such as Ultra Wide Band Access, IEEE 802. 11b, IrDA, Wireless 1394.

Information reception part 1201 receives information from transmitting apparatus 11, and can be embodied by a radio communicating means. Reception part 1201 is a communicating means in accordance with the Bluetooth standard; however it can be in accordance with standards other than the Bluetooth one such as Ultra Wide Band Access, IEEE 802. 11b.

Authentication part 1202 authenticates apparatuses based on the information received. Followings are the authentication process. Authentication part 1202 stores at least one information transmitting apparatus identifier that identifies an information transmitting apparatus to be authenticated. Authentication part 1202 determines whether or not the received information corresponds to the stored identifiers, and if it corresponds to one of the identifiers, part 1202 authenticates the apparatus that has transmitted the information. If it does not correspond to any identifier, part 1202 does not authenticate the apparatus. Authentication part 1202 can be generally embodied by an MPU and a memory, and its processing operation can be generally embodied by software, which is recorded in a recording medium such as a ROM; however, it can be embodied by a hardware (dedicated circuit).

Operation part 1203 performs a predetermined action if authentication part 1202 gives an apparatus permission. The action includes various types, and the present invention is not limited by contents of the action. The content of the action can be changed by another information or factor. The action is, e.g. an action of opening an automatic door. In this case, the operation apparatus corresponds to the automatic door.

An operation of the foregoing information processing system is demonstrated hereinafter. First, an operation of information transmitting apparatus 11 is described with reference to the flowchart shown in Fig. 2.

Information transmission part 1103 obtains information from information storage part 1101. (Step S201)

Speed sensing part 1102 senses a moving speed of apparatus 11. (Step S202)

Information transmission part 1103 determines a mode for transmitting information based on the speed sensed in step S202. This mode determines an information transmittable distance, in other words, an information transmittable distance depends on a mode. (Step S203)

Transmission part 1103 follows the mode determined in step S203, and transmits the information obtained in step S201, then the process returns to step S202. (Step S204)

In the flowchart shown in Fig. 2, an interruption by a signal indicating a power-off or a process-end will end the process.

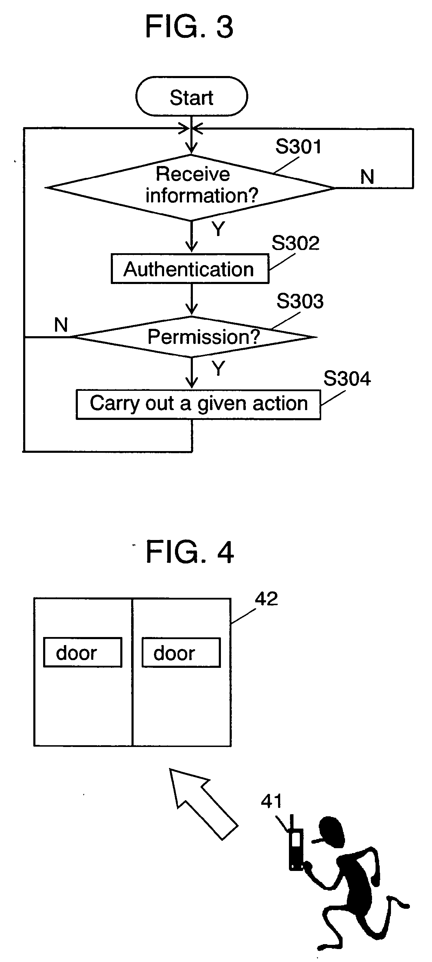

Next, an operation of operation apparatus 12 is demonstrated with reference to the flowchart shown in Fig. 3.

Information reception part 1201 determines whether or not it receives information. If the determination results in a reception, the process advances to step S302, and if the determination results in no reception, the process returns to step S301. (Step S301)

Authentication part 1202 authenticates an apparatus based on the information received. (Step S302)

Operation part 1203 determines whether or not authentication part 1202 permits authentication. If authentication is permitted, the step advances to step S304, and if not, the step returns to step S301. (Step S303)

Operation part 1203 carries out a predetermined action, and returns to step S301. (Step S304)

In the flowchart shown in Fig. 3, an interruption by a signal indicating a power-off or a process-end will end the process.

### First Exemplary Embodiment

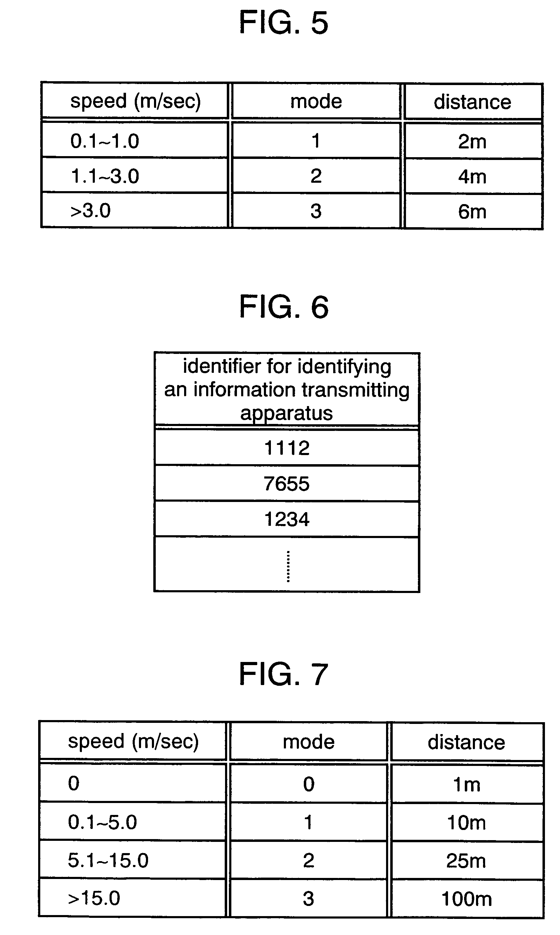

A specific operation of the information processing system in accordance with the exemplary embodiment is demonstrated hereinafter. Elements similar to those shown in Fig. 1 have the same reference marks here. Fig. 4 shows a schematic diagram of the information processing system. Information transmitting apparatus 41, which is one of the elements of the processing system, is a portable terminal and held by a user who moves with this terminal. Transmitting apparatus 41 retains identifier "1234" in information storage part 1101 for identifying an information transmitting apparatus. Information transmission part 1103 of apparatus 41 is a communicating means of Bluetooth. Apparatus 41 selects a mode from among the three modes (information transmittable distances) shown in Fig. 5 according to its own moving speed, and transmits information following the mode determined. In other words, apparatus 41 selects mode "1" when it moves at the speed of 0.1 - 1.0 meter/second (m/sec), then transmits information at a distance of 2 meters therefrom. When apparatus 41 moves at the speed of 1.1- 3.0 m/sec, it selects mode "2" and transmits information at a distance of 4 meters therefrom. When apparatus 41 moves at the speed of not less than 3.1 m/sec, it selects mode "3" and transmits information at a distance of 6 meters therefrom. The information transmission part of apparatus 41 can change an information transmittable distance by changing a transmission voltage.

In this first embodiment, operation apparatus 42, which is one of the elements of the processing system, corresponds to an automatic door. Operation apparatus 42 has at least one identifier shown in Fig. 6 for identifying an information transmitting apparatus, and determines whether or not a received identifier agrees with one of the identifiers retained by apparatus 42. If the received one agrees with anyone of the identifiers, authentication is permitted, and then apparatus 42 opens the automatic door. Apparatus 42 closes the door in a given time. The other side of the door is kept by an air-conditioner at a given temperature.

A user runs at a speed of 2.0 meter/second (m/sec), carrying information transmitting apparatus 41. Apparatus 41 senses the speed of 2.0 m/sec and selects mode "2" then obtains identifier "1234". Apparatus 41 applies a transmission voltage so that it can transmit information at a distance of 4 meters therefrom, and transmits identifier "1234" repeatedly.

Then operation apparatus 42 receives identifier "1234" as far as transmitting apparatus 41 exists within a range of 4 meters, and determines whether or not received identifier "1234" agrees with any one of the identifiers listed in the table, under the control of apparatus 42 and shown in Fig. 6. In the case of this first embodiment, identifier "1234" exists on the third line of the table, so that apparatus 42 authenticates apparatus 41, then apparatus 42 opens, namely, the automatic door corresponding to apparatus 42 opens.

In the first embodiment, the automatic door corresponds to operation apparatus 42, and the portable terminal corresponds to information transmitting apparatus 41. The automatic door thus can open in good timing when the user having the portable terminal comes to a proper position regardless of user's moving speed. The inside of the door can be thus kept at an adequate temperature, and the user can come in and go out smoothly.

### Second Exemplary Embodiment

In this second embodiment, an information transmitting apparatus can control an information transmittable distance based on the information transmitting mode-control table shown in Fig. 7. In the second embodiment, an ETC gate corresponds to operation apparatus 12, and an on-vehicle ETC apparatus corresponds to information transmitting apparatus 11.

In Fig. 7, when the on-vehicle ETC apparatus is halted (speed at 0 m/sec), information can be transmitted at a distance of 1 meter from the vehicle. When the ETC apparatus moves at a speed of not less than 15.1 m/sec, information can be transmitted at a distance as far as 100 meters from the vehicle. The ETC gate receives a signal transmitted from the ETC apparatus moving at such a high speed, and reacts to the signal. In other words, an information transmittable distance to the ETC gate (operation apparatus 12) of the on-vehicle ETC apparatus (information transmitting apparatus 11) changes in response to a moving speed of the vehicle. As a result, a faster speed of the vehicle allows the ETC gate to receive information from a longer distance, so that the ETC gate can open in good timing.

### Third Exemplary Embodiment

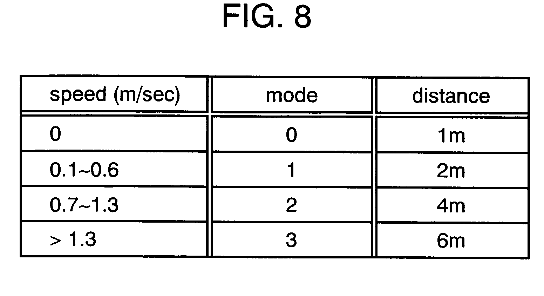

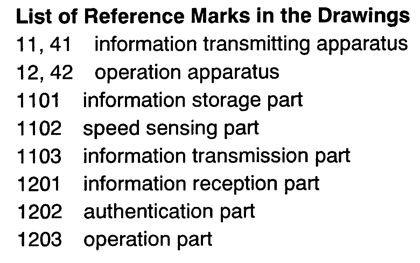

In the third embodiment, an information transmitting apparatus can control an information transmittable distance based on the information transmitting mode-control table shown in Fig. 8. In the third embodiment, a personal computer (PC) corresponds to operation apparatus 12, and a portable terminal (PDA) carries information transmitting apparatus 11.

In Fig. 8, when a user having the PDA approaches the PC at a regular walking speed (approx. 1 m/sec), information transmitting apparatus 11 mounted to the PDA selects mode 2, and transmits information at a distance of 4 meters in accordance with mode 2. When the PC comes within the range of 4 meters, information reception part 1201 of the PC, i.e. operation apparatus 12, receives the information. The PC then determines whether or not information transmitting apparatus identifier assigned to the PDA agrees with any one of the identifiers listed on the table. If the identifier agrees with one of the listed identifiers, i.e. authentication is permissible, the PC in a standby mode automatically inputs a user's ID and password, and executes a removal of input restriction. Then the user of the PDA can start working with the PC.

Various functions other than the removal of input restriction can be executed, for instance, change the screen from a standby mode to an operation mode, namely, remove the standby mode, or change a power saving mode to a regular power mode, or boot a PC, or log-in a PC.

In this embodiment, the information transmitting apparatus can change an information transmittable distance based on a mobile condition other than a speed or acceleration, thereby transmitting the information. Besides the speed and the acceleration, the mobile condition can include a distance which the transmitting apparatus has traveled, or a route along which the apparatus has moved.

Dedicated information transmitting apparatus 11 can be used. If a user carries this dedicated one in a card shape, a distance that radio-wave can travel can be controlled in response to a speed or acceleration at which the user approaches operation apparatus 12, e.g. a door, gate, PC or PDA. A removal of restriction depending on the functions of operation apparatus 12 can be achieved without inconvenience to users, and at the same time, the system works with security. To be more specific, it is possible that users need not halt and wait for opening or closing a door or a gate with the security maintained, and users need not input passwords or IDs for removing an input restriction.

As discussed above, an information transmitting apparatus changes an information transmittable distance based on a mobile condition thereof for transmitting information, so that an operation apparatus that receives the information for its operation can operate in good timing regardless of a moving speed of the information transmitting apparatus.

Bluetooth is used for transmitting information in the foregoing embodiments; however, other radio communication means can be used.

In the foregoing embodiments, the information retained by the information transmitting apparatus is used for authentication; however, the apparatus can retain other information.

In the foregoing embodiments, the operation apparatus includes an authentication part; however, this part is not an essential structural element. Not to mention, the authentication part of the operation apparatus can authenticate a transmitting apparatus in another way.

In the foregoing embodiments, information transmitting apparatus 11 changes an information transmittable distance based on its moving speed, thereby transmitting information. However, apparatus 11 can change an information transmittable distance based on its acceleration instead of its speed, thereby transmitting information. In such a case, apparatus 11 employs an acceleration sensing part instead of speed sensing part 1102, and information transmission part 1103 changes an information transmittable distance based on the acceleration sensed by the acceleration sensing part for transmitting information. The acceleration sensing part can be embodied by an acceleration sensor and its driver software. In the case of using such an acceleration sensing part, apparatus 11 comprises information storage part 1101 for storing information, the acceleration sensing part, and information transmission part 1103 for changing an information transmittable distance based on the acceleration, thereby transmitting information. Mobile conditions other than speed or acceleration can be used for changing an information transmittable distance, and the information transmitting apparatus can transmit information accordingly. The mobile condition includes a distance which the transmitting apparatus has traveled, or a route along which the apparatus has moved.

The operation described in the previous embodiment can be embodied by a program readable by a computer. The program can be recorded in a recording medium such as a CD-ROM before being delivered, or it can be delivered via a network or broadcasting. This is applicable to other embodiments. The program embodying the actions described in the foregoing embodiment is a program for a computer to execute, and the program comprises the steps of: sensing a mobile condition of the information transmitting apparatus, and changing a transmission distance of stored information based on the mobile condition, thereby transmitting the information. The program embodying the actions described in the foregoing embodiment is a program for a computer to execute the steps of: sensing a moving speed, and changing a transmission distance of stored information based on the speed, thereby transmitting the information. The program allows the computer to execute the steps of: sensing acceleration, and changing a transmission distance of stored information based on the acceleration, thereby transmitting the information.

### Industrial Applicability

An information transmitting apparatus equipped with an information transmission part that transmits information can automatically change an information transmittable distance based on a mobile condition of the apparatus, so that an operation apparatus that receives the transmitted information for its operation can work in good timing.

## Claims

1. An information transmitting apparatus comprising:
an information storage part for storing information;
a sensing part for sensing a mobile condition of the information transmitting apparatus; and
an information transmission part for changing an information transmittable distance based on the mobile condition, then transmitting the information.

2. The information transmitting apparatus of claim 1, wherein the mobile condition is at least one mobile condition selected from the group consisting of a moving speed, moving acceleration, a traveling distance, and a traveling route of the information transmitting apparatus, wherein the sensing part senses the mobile condition.

3. The information transmitting apparatus of claim 1, wherein the information transmission part is a communication means in accordance with the Bluetooth standard.

4. The information transmitting apparatus of claim 1, wherein the information transmission part divides the mobile condition into a plurality of ranks, and transmits the stored information by a predetermined power according to each one of the ranks.

5. The information transmitting apparatus of claim 1, wherein the information transmission part divides the mobile condition into a plurality of ranks, and changes a transmittable distance in each one of the ranks for transmitting the stored information.

6. The information transmitting apparatus of claim 1, wherein the sensing part senses at least one mobile condition selected from the group consisting of a moving speed, moving acceleration, a traveling distance, and a traveling route of the information transmitting apparatus, and wherein the information transmission part divides the mobile condition into a plurality of ranks, and changes a transmittable distance in each one of the ranks for transmitting the stored information.

7. An operation apparatus comprising:
an information reception part for receiving information from an information transmitting apparatus which comprises:
an information storage part for storing information;
a sensing part for sensing a mobile condition of the information transmitting apparatus; and
an information transmission part for changing an information transmittable distance based on the mobile condition, then transmitting the information,
an authentication part for carrying out authentication based on the received information; and
an operation part for carrying out a predetermined action when the authentication part issues a permission of authentication.

8. The operation apparatus of claim 7, wherein the apparatus is an automatic door and the operation part opens the door.

9. An information processing system comprising:
an information transmitting apparatus including:
an information storage part for storing information;
a sensing part for sensing a mobile condition of the information transmitting apparatus; and
an information transmission part for changing an information transmittable distance based on the mobile condition, then transmitting the information, and
an operation apparatus including:
an information reception part for receiving information from the information transmitting apparatus;
an authentication part for carrying out authentication based on the received information; and
an operation part for carrying out a predetermined action when the authentication part issues a permission of authentication.

10. The information processing system of claim 9, wherein the mobile condition is at least one mobile condition selected from the group consisting of a moving speed, moving acceleration, a traveling distance, and a traveling route of the information transmitting apparatus, wherein the sensing part senses the mobile condition, and the information transmission part is a communication means in accordance with a Bluetooth standard.

11. The information processing system of claim 9, wherein the information transmission part divides the mobile condition into a plurality of ranks, and transmits the stored information by a predetermined power according to each one of the ranks.

12. A program for a computer to execute thereof, the program comprising the steps of:
sensing a mobile condition of an information transmitting apparatus; and
transmitting the information with changing a transmission distance of stored information based on the mobile condition.

13. The program of claim 12, wherein the step of sensing is to sense at least one mobile condition selected from the group consisting of a moving speed, moving acceleration, a traveling distance, and a traveling route of the information transmitting apparatus.

14. The program of claim 12, wherein the step of sensing includes a step of sensing a moving speed of the information transmitting apparatus, and the step of transmitting includes a step of changing the transmission distance of the information based on the speed before transmitting the information.

15. The program of claim 12, wherein the step of sensing includes a step of sensing acceleration of the moving information transmitting apparatus, and the step of transmitting includes a step of changing the transmission distance of the information based on the acceleration before transmitting the information.
